# FASCICULE DE BREVET EUROPEEN

(11) **EP 3 510 512 B1**
(45) Date de publication et mention de la délivrance du brevet: **06.04.2022**
(21) Numéro de dépôt: 17780787.2
(22) Date de dépôt: 04.09.2017
(51) Int. Cl.: G06F 21/10, G07G 1/00, G06F 16/632, G06F 16/68, G06Q 20/32

(54) **DISPOSITIF D'ASSOCIATION D'AU MOINS UN SUPPORT PHYSIQUE AVEC UN MOYEN DE STOCKAGE DE DONNEES NUMERIQUES**
VORRICHTUNG ZUR ZUORDNUNG VON MINDESTENS EINEM PHYSIKALISCHEN TRÄGER ZU EINER VORRICHTUNG ZUR SPEICHERUNG DIGITALER DATEN
DEVICE FOR ASSOCIATING AT LEAST ONE PHYSICAL SUPPORT WITH A MEANS FOR STORING DIGITAL DATA

(30) Priorité: 08.09.2016 FR 1601327
(43) Date de publication de la demande: 17.07.2019
(73) Titulaire: Revive SAS, 60320 Saint Sauveur (FR)
(72) Inventeur: COUSSONNET, Laurent, 63170 Aubiere (FR); RANC, Emmanuel, 63000 Clermont Ferrand (FR)
(74) Mandataire: Dennemeyer & Associates S.A.
(86) Numéro de dépôt international: PCT/FR2017/052337
(87) Numéro de publication internationale: WO 2018/046829

(56) Documents cités:
- WO-A1-2005/081087
- WO-A1-2005/081088
- DE-A1-102011 056 420
- US-A1- 2006 158 341

## Description

La présente invention concerne un dispositif d'association d'au moins un support physique avec un moyen de stockage de données numériques.

Dans le cadre de l'invention, le support physique est lui-même associé à au moins un fichier contenant au moins des données audio.

Ici, l'expression « support physique associé à au moins un fichier audio »doit être comprise comme désignant un objet physique, au sens de réel, qui contient, représente, illustre ou évoque au moins un, avantageusement plusieurs, fichiers audio. Ici, l'expression « fichier audio » doit être comprise comme désignant un fichier contenant au moins des données sonores, dites données audio, telles que des chansons, de la musique, de la voix humaine ou des sons d'origine naturelle, par exemple le bruit du vent, des vagues ou des cris d'animaux. Un tel support est, au sens de l'invention et à titre d'exemple non limitatif, une cassette audio, un disque vinyle, un CD, un DVD, une cassette VHS ou bien encore un emballage, un étui, une boite ou un objet décoratif. On conçoit qu'un tel support peut contenir ou être associé à d'autres types de données, notamment des fichiers image et/ou vidéo associés ou non au fichier audio.

Un moyen de stockage de données numériques s'entend, au sens de la présente invention, comme désignant un serveur de stockage de données, comportant au moins une base de données. Ce serveur de stockage permet de stocker et d'héberger pour une utilisation ultérieure des fichiers audio, images et/ou vidéos sous forme numérique. Un tel moyen de stockage de données est, par exemple, accessible via un réseau de communication soit filaire soit non filaire. Dans ce dernier cas, le serveur est, par exemple, hébergé dans l'informatique en nuage ou cloud computing. Par la suite, on utilisera préférentiellement, pour plus de lisibilité, le terme cloud. Un tel moyen de stockage présente l'avantage, du fait qu'il s'agit d'un environnement virtualisé, d'avoir une couverture mondiale facilitant l'accès au moyen de stockage à partir de n'importe quel lieu. Un tel moyen de stockage est accessible via un réseau de communication tel que les réseaux GSM ou via internet. Dans tous les cas, le moyen de stockage de données est distinct et indépendant du support contenant ou associé à un fichier audio.

Actuellement il est courant d'accéder aux moyens de stockage de données numériques, tel un serveur hébergé dans le cloud, par un moyen de communications sans fil, fréquemment un moyen dit nomade ou mobile. Parmi les moyens les plus fréquemment utilisés, on peut citer les smartphones, les tablettes, les ordinateurs, les lecteurs MP3 ou autres. Ces moyens permettent, sous un encombrement réduit, une lecture en tout lieu et à tout moment de fichiers, notamment audio, dont le nombre peut atteindre plusieurs milliers. Avec de tels moyens, les fichiers sont soit stockés sur un moyen de stockage de données distant, par exemple via le cloud, soit sur le moyen lui -même, via une carte SD ou la mémoire interne du moyen.

Si un tel moyen d'accès à la lecture et au stockage de fichiers audio présente de nombreux avantages, il ne permet le stockage et la lecture que des fichiers ayant un format adapté. En d'autres termes, les fichiers non numériques ne sont pas gérés par de tels moyens. Pour remédier à cela, on connait des dispositifs, souvent proposés sous forme de services par des structures spécialisées, qui assurent la conversion au format numérique des données des fichiers audio. Il est alors possible de profiter des possibilités de lecture nomade offert par un moyen de lecture, avec la qualité numérique, pour des données audio qui, initialement, ne sont pas numériques.

Ceci étant, la mise en oeuvre d'une telle solution est fastidieuse puisqu'il est nécessaire pour l'utilisateur qu'il procède, au préalable, à la numérisation de ses fichiers audio, cela sans parler du coût de ce service. La durée de vie des supports de fichiers audio actuels, par exemple les DVD ou les CD, étant limitée, la commercialisation de ces fichiers s'effectue de plus en plus de manière dématérialisée, via des accès à des serveurs distants. De ce fait, le consommateur ne dispose plus d'un objet physique pérenne qui matérialise le ou les fichiers. De plus, il est fréquent que les données audio non numériques soient stockées, à l'origine, sur des supports qui, soit présentent en tant que tel un intérêt, soit assurent le stockage d'autres informations également non numérisées. A titre d'exemple, on peut citer une pochette de disque vinyle avec un graphisme, des photos, une partition, un livret ou autre. Par ailleurs, l'utilisateur peut, pour des raisons personnelles, être attaché au support. En d'autres termes, les dispositifs de numérisation ne permettent que la numérisation des données. Le support n'est pas pris en compte et, de facto, devient inutile. Or, il existe des supports de fichiers audio qui, en tant que tels, ont une valeur marchande et/ou sentimentale élevée, ce qui implique leur conservation.

On connait par WO-A-2005/081088 un dispositif d'association d'une pochette de CD avec un moyen de lecture d'un organe associé à la pochette du CD. Le moyen de lecture permet de communiquer avec une base de données distante permettant d'obtenir des informations supplémentaires liées à la pochette, par exemple des objets ou des informations sur des concerts. Ici, on ne relie pas le contenu initial du CD avec le reste du dispositif. Par ailleurs, une telle solution est spécifique à un type de produit, en l'espèce une pochette de CD.

C'est à ces inconvénients qu'entend plus particulièrement remédier l'invention en proposant un dispositif d'association d'au moins un support physique d'au moins un fichier audio avec un moyen de stockage de données numériques, permettant à la fois la conservation du support et l'utilisation des données numérisées à partir des données du fichier audio stocké sur le support.

La présente invention est définie par la revendication indépendante. Des caractéristiques avantageuses sont exposées dans les revendications dépendantes.

Selon des aspects avantageux mais non obligatoires de l'invention, un tel dispositif peut comprendre une ou plusieurs des caractéristiques suivantes:
- l'organe formé par un type particulier d'un élément de type RFID (Radio frequency Identification) est un circuit électronique de type NFC (Near Field Communication).
- Le moyen de lecture est choisi parmi au moins les smartphones, les tablettes.
- Le moyen de lecture est solidaire du moyen de stockage de données.
- Le moyen de lecture est distant du moyen de stockage de données, celui-ci étant hébergé dans l'informatique en nuage (cloud computing).
- Le module de gestion et de commande du dispositif est un module de type HSM (hardware Security Module).

L'invention sera mieux comprise et d'autres avantages de celle-ci apparaitront plus clairement à la lecture de la description qui va suivre de plusieurs modes de réalisation de l'invention, donnée à titre d'exemple non limitatif et faite en référence au dessin suivant dans lequel :

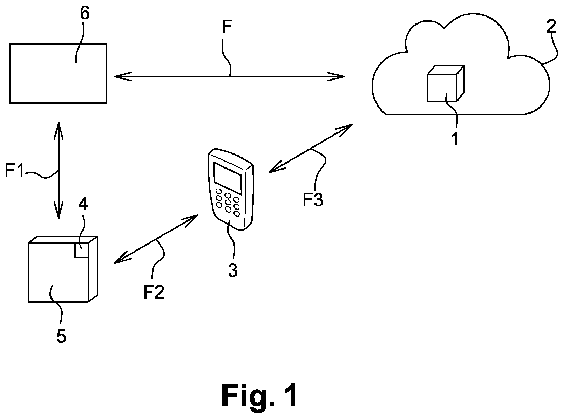

- La figure 1 est un diagramme simplifié du dispositif.

Le moyen de stockage des données 1 est hébergé sur un serveur distant des autres éléments constitutifs du dispositif. Par la suite, pour faciliter la lisibilité, l'expression « moyen de stockage » sera également utilisée. Ce serveur est accessible via un réseau de communication sans fil, typiquement via le réseau 3G, 4G ou via internet. En d'autres termes, le moyen de stockage 1 est avantageusement logé dans le l'information en nuage ou cloud computing 2. En variante non illustrée, le moyen de stockage des données 1 est situé sur un serveur relié de manière filaire aux autres éléments du dispositif. Un tel moyen de stockage de données héberge non seulement des fichiers contenant des données audio, sous forme numérique, mais aussi d'autres types de fichiers numériques, par exemple des fichiers contenant des données vidéo ou des images. Un tel moyen de stockage est avantageusement dédié à l'invention. En d'autres termes, Un tel moyen de stockage est adapté pour ne pas être utilisé en dehors du cadre de l'invention, ce qui optimise la sécurité du dispositif. En variante, il s'agit d'un moyen de stockage de données connue et existante qui stocke déjà des fichiers dits audio. On connait de tels moyens, également dénommés bases de données qui fournissent à la demande, par exemple avec un système d'abonnement, des fichiers dits audio tels que des chansons ou des morceaux de musique.

Le moyen de lecture 3 dudit fichier audio est avantageusement un moyen mobile, tel qu'un smartphone, une tablette ou bien une phablette, donc un smartphone avec une taille d'écran proche de celle d'une tablette, typiquement supérieure à 6 pouces. Le moyen de lecture 3 communique via le réseau GSM ou via le réseau internet avec la base de données 1 située dans le cloud computing 2 et hébergeant les fichiers audio. En variante non illustrée, le moyen de lecture est fixe ou du moins difficilement déplaçable pour un usage nomade. Typiquement, il s'agit d'un ordinateur, voire d'une tablette ou d'un appareil dédié, de type juke box ou encore une télévision adaptée pour se connecter à internet et désignée par l'expression smart TV. En variante, le moyen de lecture est solidaire du moyen d'hébergement du moyen de stockage de données, ou du moins relié à ce dernier par une liaison filaire.

Un organe 4 est intégré ou fixé, de manière définitive ou non, sur un support physique 5 sur lequel est stocké ou associé, initialement, au moins un fichier contenant des données audio. Un tel support 5 est, par exemple, un disque vinyle, un CD, un DVD, une cassette audio, une cassette VHS ou autre. Ici, le support 5 est schématiquement illustré par un parallélépipède.

L'organe 4, fixé sur le support 5, se présente sous la forme d'un circuit électronique comprenant au moins une puce électronique et au moins une antenne radiofréquence.

Un tel circuit est également désigné par le terme étiquette, c'est-à-dire un organe de faible épaisseur par rapport à ses autres dimensions, léger, d'un encombrement suffisamment faible pour être fixé sur une partie du support 5 ou intégré au support 5, avantageusement sans modifier sensiblement l'aspect global du support 5. Aussi, les expressions « circuit NFC », « étiquette NFC » seront également employées pour désigner l'organe 4.

L'organe 4 est, de manière préférée mais non exclusive, un type particulier d'un élément de type RFID (Radio frequency Identification), à savoir un circuit électronique de type NFC (Near Field Communication). L'organe 4, donc en l'espèce le circuit NFC, est fixé par collage ou soudage sur le support ou intégré, donc noyé dans la masse, du support 5. Un tel circuit NFC 4 comprend, en variante, une partie adhésive facilitant sa fixation sur le support 5.

Le circuit NFC 4 comprend au moins une puce électronique sécurisée c'est-à-dire une puce électronique disposant d'un espace mémoire crypté et non copiable et au moins une antenne radiofréquence. Un tel organe 4 permet une communication avec des appareils de lecture compatibles sur une faible distance. La distance séparant l'appareil de lecture et le circuit NFC 4 est de l'ordre de quelques dizaines de centimètres.

Un tel organe 4, ici une étiquette NFC, répond à des normes internationales, en l'espèce les normes ISO 14443 et 15693 qui sont actuellement en vigueur, ce qui assure une large diffusion au niveau mondial. En effet, une part importante des moyens de lecture, sont adaptés aujourd'hui pour communiquer avec des organes 4 de type étiquette NFC. Ainsi, le moyen de lecture 3, lorsqu'il s'agit, préférentiellement, d'un smartphone, est adapté pour, d'une part, communiquer avec un organe 4 fixé ou intégré sur le support 5 et, d'autre part, communiquer avec le moyen de stockage des données 1 distant.

Dans un mode de réalisation, la partie adhésive de l'organe 4 assure une fixation aisée sur tout type de support, par exemple sur un polymère, du verre ou du carton. Dans un autre mode de réalisation, préféré, l'organe 4 est intégré au matériau constitutif du support 5. Il est alors impossible de désolidariser l'organe 4 du support, sans altérer au moins un des composants de l'étiquette NFC et/ou le support, cela d'autant que l'intégration peut être réalisée de sorte à ne pas être détectable par un utilisateur non averti. En d'autres termes, l'étiquette NFC 4 est dissimulée dans le support et sa présence n'est pas, visuellement, détectable.

Comme cela ressort de la figure 1, le dispositif comprend également un module 6 de gestion et de commande du dispositif. Ce module 6 est, avantageusement, un module de type HSM (hardware Security Module). Il s'agit, avantageusement, d'un appareil qui présente de très importantes caractéristiques de sécurité qui le rendent quasiment inviolable. Un tel module 6 permet de générer, de stocker et de protéger des clefs cryptographiques qui seront stockées sur la puce électronique de l'étiquette NFC 4. La puce électronique comprend différents types de données stockées dans les zones mémoires de la puce électronique. A titre d'exemples non limitatifs, on peut citer des données dites publiques, accessibles par tous et non sécurisées ainsi que des données privées accessibles seulement par des personnes habilitées et gérées par le module de gestion 6. La puce électronique de l'étiquette NFC 4 comprend également au moins une signature cryptée unique générée par le module de gestion 6 et stockée de manière sécurisée dans une zone mémoire protégée de la puce électronique de l'étiquette NFC 4.

Ce module 6 peut être une carte électronique insérée sur un ordinateur ou se présenter sous forme d'un boîtier électronique externe. En variante, il peut s'agir d'un module immatériel ou SSM (Software Security Module), de type logiciel mais un module 6, de type hardware, procure un plus haut niveau de sécurité. Dans tous les cas, un tel module 6-également dénommé plateforme-permet de répondre aux normes internationales les plus strictes en matière de sécurité. En d'autres termes, le module 6 permet de générer et de gérer des clés cryptographiques destinées au stockage des données dans la puce électronique de l'organe 4.

Un mode d'utilisation du dispositif est maintenant décrit en référence à la figure 1.

Dans une première étape, le module 6 échange, de manière sécurisée donc de manière cryptée et non copiable, par une liaison filaire ou non, illustrée par la double flèche F, des données avec le moyen de stockage 1 hébergée dans le cloud 2. En particulier, cet échange permet de collecter les informations relatives aux contenus numériques disponibles dans le moyen de stockage de données, aux rôles et aux droits liés à l'accès au moyen de stockage de données, c'est-à-dire au type d'usager (administrateur, utilisateur, lecteur..) et à ses prérogatives.

A partir de cet échange, le module 6 génère, dans une seconde étape d'échange de données illustrée par la double flèche F1, des éléments nécessaires à la production et à la gestion des puces électroniques incorporées à l'étiquette NFC 4. Il s'agit, entre autres et de manière non limitative, des cycles de vie, des privilèges, des certificats, du contenu informatif de la puce, des conditions d'accès aux données publiques et privées de la puce électronique de l'étiquette NFC 4.

Ensuite, l'organe NFC 4 est solidarisée au support 5, cela de préférence mais non exclusivement, lors de la fabrication du support 5. La solidarisation s'effectue par collage ou par soudage, par incorporation à un élément constitutif du support ou par toute autre technique de solidarisation connue en soi.

On obtient ainsi un organe 4, ici passif, qui contient les informations relatives au contenu situé sur le support 5 et à son utilisation.

On conçoit qu'en variante, les première et seconde étapes sont faites simultanément ou dans un ordre différent, les échanges entre le module 6 et l'organe 4 étant alors effectués en premier.

Lorsqu'un utilisateur souhaite obtenir une lecture, soit par téléchargement autorisé d'au moins un fichier contenant des données audio sur son moyen de lecture 3 soit en streaming, donc en lecture seule, il connecte, selon la double flèche F2, son moyen de lecture 3 avec l'organe 4, donc l'étiquette NFC, fixée ou intégrée sur le support 5. Par exemple, une lecture dite publique des données publiques inscrites dans une zone mémoire de la puce électronique de l'étiquette NFC 4 correspond à une pré-écoute, partielle ou non, d'un fichier audio du support physique 5, avant achat dudit fichier.

Ainsi, les informations concernant l'accès de cet utilisateur au support, et qui sont prédéfinies dans le module de gestion 6, sont transmises au moyen de lecture qui, en parallèle, se connecte, selon la double flèche F3, avec le moyen de stockage 1. Il y a donc un échange entre l'étiquette NFC 4, donc de facto entre le contenu du support 5, et le moyen de stockage 1 via le moyen de lecture 3.

Ce dernier, après identification et éventuellement paiement, collecte le fichier contenant des données audio numérisé qui correspond au contenu du support. L'utilisateur profite alors d'une écoute, nomade et en qualité numérique, du contenu originellement associé au support physique.

On conçoit qu'un tel dispositif permet une grande souplesse d'utilisation et d'applications. A titre d'exemples non limitatifs, on peut citer un accès gratuit sur une période donnée à un fichier contenant des données audio, ou à une partie de ce fichier, à partir d'un support physique localisé dans un magasin, par exemple un CD ou un DVD de démonstration.

On peut également avoir accès à des informations audio à partir d'une borne d'informations, voire à des fichiers d'images. D'autres informations peuvent être accessibles par ce dispositif même si elles ne sont pas d'origine associées au support physique. Il s'agit par exemple d'un accès à des traductions du fichier audio d'origine, des informations sur l'auteur du fichier audio, d'autres interprétations du fichier audio ou des fichiers audio liés au fichier écouté.

Par ailleurs un tel dispositif est aisément connecté avec un service payant ou de vente en ligne. Il permet également d'optimiser l'écoute des données audio du fichier, en collectant des informations statistiques sur l'écoute du fichier. En d'autres termes, la gestion des droits d'auteur est facilitée dans le module de gestion 6 pour administrer des droits de service payants et stocker des informations relatives à ces droits dans une zone mémoire de la puce électronique de l'étiquette NFC 4.

## Revendications

1. Dispositif d'association d'au moins un support physique (5), ledit support (5) étant lui-même associé à au moins un fichier contenant au moins des données audio, avec un moyen de stockage de données numériques, comprenant:
- un module de gestion et de commande (6) du dispositif, ledit module (6) étant adapté pour échanger de manière cryptée des données avec
- un moyen de stockage de données numériques (1) d'au moins un fichier contenant au moins des données audio, ledit fichier correspondant à une version numérique d'un fichier contenant au moins des données audio et associé initialement à au moins un support physique (5) choisi parmi les DVD, CD, cassettes, VHS ou disques vinyle,
- un moyen de lecture (3) dudit fichier contenant au moins des données audio sous forme numérique, relié au moyen de stockage de données (1) par une liaison filaire ou non,
- un organe (4), formé par un type particulier d'un élément de type RFID, Radio frequency Identification, intégré sur ledit support physique (5) et stockant des informations nécessaires à la lecture d'au moins un fichier contenant au moins des données audio stocké sous forme numérique dans ledit moyen de stockage de données (1) par ledit moyen de lecture (3), le module de gestion et de commande (6) étant adapté pour générer et gérer des clés cryptographique destinées au stockage desdites informations dans l'organe (4).

2. Dispositif d'association selon la revendication 1, **caractérisé en ce que** l'organe (4) formé par un type particulier d'un élément de type RFID est un circuit électronique de type NFC, Near Field Communication.

3. Dispositif d'association selon l'une des revendications précédentes, **caractérisé en ce que** le moyen de lecture (3) est choisi parmi au moins les smartphones, les tablettes.

4. Dispositif d'association selon la revendication 1, **caractérisé en ce que** le moyen de lecture (3) est solidaire du moyen de stockage de données (1).

5. Dispositif d'association selon la revendication 1, **caractérisé en ce que** le moyen de lecture (3) est distant du moyen de stockage de données (1), celui-ci étant hébergé dans l'informatique en nuage (2), cloud computing.

6. Dispositif d'association selon la revendication 1, **caractérisé en ce que** le module de gestion et de commande (6) du dispositif est un module de type HSM, Hardware Security Module.

## Patentansprüche

1. Vorrichtung zur Assoziation mindestens eines physischen Trägers (5), wobei der Träger (5) selbst mit mindestens einer Datei , die mindestens Audiodaten enthält, assoziiert ist, mit einem Mittel zur Speicherung digitaler Daten, die umfasst:
- ein Verwaltungs- und Steuermodul (6) der Vorrichtung, wobei das Modul (6) dazu angepasst ist, Daten auf verschlüsselte Weise mit
- einem Mittel zur Speicherung digitaler Daten (1) mindestens einer Datei, die mindestens Audiodaten enthält, auszutauschen, wobei die Datei einer digitalen Version einer Datei entspricht, die mindestens Audiodaten enthält und ursprünglich mit mindestens einem physischen Träger (5), der aus den DVDs, CDs, Kassetten, VHS oder Vinyl-Schallplatten gewählt ist, zugeordnet ist,
- ein Lesemittel (3) der Datei, die mindestens Audiodaten in digitaler Form enthält, das mit dem Datenspeichermittel (1) über eine drahtgebundene oder nicht drahtgebundene Verbindung verbunden ist,
- ein Organ (4), das aus einem besonderen Typ eines Elements vom Typ RFID, Radio Frequency Identification, gebildet ist, das auf dem physischen Träger (5) integriert ist und Informationen speichert, die zum Lesen mindestens einer Datei, die mindestens Audiodaten enthält, die in digitaler Form in dem Datenspeichermittel (1) gespeichert sind, durch das Lesemittel (3) erforderlich sind, wobei das Verwaltungs- und Steuermodul (6) dazu angepasst ist, kryptografische Schlüssel, die zum Speichern der Informationen in dem Organ (4) bestimmt sind, zu erzeugen und zu verwalten.

2. Assoziationsvorrichtung nach Anspruch 1, **dadurch gekennzeichnet, dass** das Organ (4), das aus einem besonderen Typ eines Elements vom Typ RFID gebildet ist, eine elektronische Schaltung vom Typ NFC, Near Field Communication, ist.

3. Assoziationsvorrichtung nach einem der vorstehenden Ansprüche, **dadurch gekennzeichnet, dass** das Lesemittel (3) aus mindestens den Smartphones, den Tablets gewählt ist.

4. Assoziationsvorrichtung nach Anspruch 1, **dadurch gekennzeichnet, dass** das Lesemittel (3) mit dem Datenspeichermittel (1) fest verbunden ist.

5. Assoziationsvorrichtung nach Anspruch 1, **dadurch gekennzeichnet, dass** das Lesemittel (3) von dem Datenspeichermittel (1) entfernt ist, wobei dieses in einer Rechnerwolke (2), Cloud-Computing, gehostet ist.

6. Assoziationsvorrichtung nach Anspruch 1, **dadurch gekennzeichnet, dass** das Verwaltungs- und Steuermodul (6) der Vorrichtung ein Modul vom Typ HSM, Hardware Security Module, ist.

## Claims

1. Device for associating at least one physical support (5) with a means for storing digital data, said support (5) being itself associated with at least one file containing at least audio data, comprising:
- a management and control module (6) for the device, said module (6) being suitable for exchanging data in an encrypted manner with
- a means for storing digital data (1) of at least one file containing at least audio data, said file corresponding to a digital version of a file containing at least audio data and initially associated with at least one physical support (5) chosen from DVDs, CDs, cassettes, VHS or vinyl records,
- a reading means (3) for reading said file containing at least audio data in digital form, connected to the data storage means (1) by a wired or wireless connection,
- a member (4), formed by a particular type of RFID (Radio Frequency Identification) element, integrated on said physical support (5) and storing information necessary for reading at least one file containing at least audio data stored in digital form in said data storage means (1) by said reading means (3), the management and control module (6) being suitable for generating and managing cryptographic keys intended for the storage of said information in the member (4).

2. Association device according to claim 1, **characterised in that** the member (4) formed by a particular type of RFID element is an NFC (Near Field Communication) electronic circuit.

3. Association device according to one of the preceding claims, **characterised in that** the reading means (3) is chosen from at least smartphones and tablets.

4. Association device according to claim 1, **characterised in that** the reading means (3) is integral with the data storage means (1).

5. Association device according to claim 1, **characterised in that** the reading means (3) is remote from the data storage means (1), the latter being hosted in the cloud (2) (cloud computing).

6. Association device according to claim 1, **characterised in that** the management and control module (6) of the device is an HSM (Hardware Security Module) type module.
